# EUROPEAN PATENT APPLICATION

(11) **EP 3 528 141 A1**
(43) Date of publication of application: **21.08.2019**
(21) Application number: 17861348.5
(22) Date of filing: 16.10.2017
(51) Int. Cl.: G06F 17/30, G06F 12/00

(54) **DATA PROCESSING DEVICE AND DATA PROCESSING METHOD**

(30) Priority: 17.10.2016 JP 2016203376
(71) Applicant: Nippon Telegraph And Telephone Corporation, Chiyoda-ku, Tokyo 100-8116 (JP)
(72) Inventor: KASHIWAGI, Keiichiro, Musashino-shi Tokyo 180-8585 (JP); ISHII, Hisaharu, Musashino-shi Tokyo 180-8585 (JP); YOSHIDA, Yui, Musashino-shi Tokyo 180-8585 (JP)
(74) Representative: Zech, Stefan Markus
(86) International application number: PCT/JP2017/037416
(87) International publication number: WO 2018/074431

(57) **Abstract**

In a first aspect of the present invention, a data processing device includes a first recording part capable of storing data permanently, a second recording part having a reading speed faster than a reading speed of the first recording part, a processing part that stores data generated by a data generation source in the first recording part, and if the data generated by the data generation source matches a retrieval condition registered in advance, further stores the data generated by the data generation source in the second recording part, and a retrieving part that searches the second recording part preferentially over the first recording part in response to a data processing request from an application.

## Description

### FIELD

The present invention relates generally to a technique for performing accumulation of enormous amounts of data in a database and data reference to a database at high speed.

### BACKGROUND

In recent years, the Internet of Things (IoT), which connects various devices/sensors to a network and utilizes data collected from these devices/sensors, is attracting attention. Since IoT collects data from a large number of devices/sensors, a data processing device including a database capable of accumulating a large amount of lightweight data is required.

In many cases of IoT utilization examples, analysis, prediction, actuation, etc. are performed using most recent data acquired from devices/sensors. In this regard, the following two points are characteristics of a database.
1. Data writing is performed with high frequency in a time-series order.
2. Frequency of referring to a value belonging to the latest segment on a time series among all the data is high.

Furthermore, as a representative utilization example of IoT, anomaly detection, etc. are performed based on an analysis using data accumulated in a long term or a real time analysis. In this regard, the following two points are required of the data processing device.
1. The device can store data permanently and process the data in bulk.
2. The device can acquire the latest value of data at high speed.

That is, data processing devices for IoT are required to be able to achieve both data persistence and a high-speed capability of acquiring the latest value.

As seen in the configuration of a general computer, existing data processing devices includes two kinds of devices, which are a storage device, such as a hard disk which can record data permanently but whose data reading speed is not fast, and a data holding part, such as a cache on a memory that can read data at high speed but does not store data permanently with small capacity.

Some conventional data processing devices include a mechanism for holding indices in a memory in order to speed up data retrieval. However, when the number of data is very large like sensor data, generation of indices that increase in accordance with the number of data may become a bottleneck at the time of data writing, and the indices may not fit in the memory. Furthermore, in the sensor data, since the frequency of referring to a value of the latest segment is high, even if the indices are generated for all the data, most of it is not referred to and an effect of speeding up by the indices is small.

Furthermore, some conventional data processing devices include a mechanism for speeding up the reference to the same data using a cache in order to speed up reading of data. However, it is not realistic to hold the latest value of a large amount of sensor data in a cache having a limited capacity, and in the sensor data whose latest value is constantly updated in a time-series order, since the frequency of referring to the same data is low, an effect of speeding up by the cache is small.

As described above, with the conventional technique using an index or simply using a cache, it is difficult to achieve compatibility between high-speed processing and persistence of data such as sensor data.

In the IoT field, in addition to being required to process a large number of data, both of a long-term analysis and a real time analysis can be subjects. Thus, persistence of stored data and high-speed and frequent reference to the latest value are required. However, with the conventional data processing device, it is difficult to simultaneously achieve improvement of the writing speed and the data reference speed and the persistence of the stored data for a large amount of data.

### SUMMARY

The present invention has been made in view of the above circumstances, and it is an object thereof to provide a data processing device and a data processing method capable of realizing persistence of stored data and high-speed data processing.

In a first aspect of the present invention, a data processing device includes a first recording part capable of storing data permanently, a second recording part having a reading speed faster than a reading speed of the first recording part, a processing part that stores data generated by a data generation source in the first recording part, and if the data generated by the data generation source matches a retrieval condition registered in advance, further stores the data generated by the data generation source in the second recording part, and a retrieving part that searches the second recording part preferentially over the first recording part in response to a data processing request from an application.

In a second aspect of the present invention, when data that is a target of the data processing request is not present in the second recording part as a result of searching the second recording part, the retrieving part searches the first recording part.

In a third aspect of the present invention, the retrieval condition includes a condition that target data belongs to a latest segment on a time series.

In a fourth aspect of the present invention, the retrieval condition includes a condition that target data is error data.

In a fifth aspect of the present invention, the data processing device, the data generation source, and the application are implemented in different virtual units. By implementing a data processing device, a data generation source, and an application in different virtual units, resources can be separated and used safely. In addition, by implementing the data processing device, data generation source, and an application in virtual units, it may be possible to save hardware resources, such as a CPU and a memory, and to reduce the trouble of updating, adding, or deleting software.

According to the present invention, persistence of stored data and high-speed data processing can be realized.

### BRIEF DESCRIPTION OF THE DRAWINGS

FIG. 1 is a block diagram showing a configuration example of a data processing device according to a first embodiment.
FIG. 2 is a block diagram showing a configuration example of a data processing system including the data processing device according to the first embodiment.
FIG. 3 is a diagram for explaining a data accumulation method in the data processing system shown in FIG. 2.
FIG. 4 is a flowchart showing a data accumulation method in the data processing system shown in FIG. 2.
FIG. 5 is a diagram for explaining a data reference method in the data processing system shown in FIG. 2.
FIG. 6 is a flowchart showing the data reference method in the data processing system shown in FIG. 2.
FIG. 7 is a block diagram showing a hardware configuration example of the data processing device shown in FIG. 2.

### DETAILED DESCRIPTION

Hereinafter, embodiments of the present invention will be described with reference to the drawings. Like reference numerals are attached to similar elements throughout the drawings, and a redundant explanation of each element is appropriately omitted. Regarding each element, branch numbers may be added to reference numerals to distinguish and describe individual elements.

### (First Embodiment)

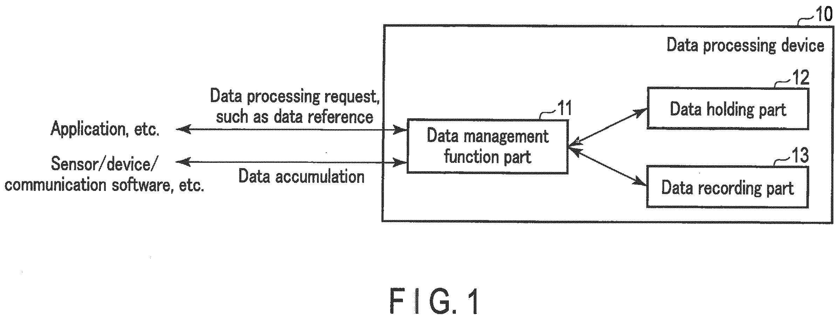

FIG. 1 schematically shows a configuration example of a data processing device 10 according to a first embodiment. As shown in FIG. 1, the data processing device 10 includes a data management function part 11, a data holding part 12, and a data recording part 13. The data management function part 11 communicates with the outside of the data processing device 10 and exchanges data with the data holding part 12 and the data recording part 13 which form a database. Part or all of functions of the data processing device 10 can be realized by having a processor (for example, a central processing unit (CPU)) execute a computer program stored in a memory.

A data generation source is connected to the data processing device 10. The number of data generation sources connected to the data processing device 10 can vary dynamically. That is, the data generation sources to be connected to the data processing device 10 can be added or deleted. Examples of data generation source are sensors, devices, communication software, etc. The data generation source sequentially (for example, periodically) generates data at a discretionary timing, and sequentially sends the data to the data processing device 10. In the data processing device 10, data from the data generation source is input to the data management function part 11. The data management function part 11 saves the data received from the data generation source in the data recording part 13.

The data recording part 13 permanently stores data. It is desirable that the data recording part 13 has a fast data writing speed. As the data recording part 13, for example, a nonvolatile memory, such as a hard disk drive (HDD), can be used. Specifically, the data recording part 13 may be a database constructed on the HDD. Persistence is maintained by accumulating all the data in the data recording part 13. The data recording part 13 stores a retrieval condition registered in advance, and has a standby retrieval function using the retrieval condition and a notification function such as a call back. Specifically, when data is stored, the data recording part 13 collates the data with the retrieval condition, and when the data matches the retrieval condition, it passes the data to the data holding part 12. This data is stored in the data holding part 12. A reading speed of the data holding part 12 is faster than that of the data recording part 13. In addition, the data holding part 12 is typically smaller in capacity than the data recording part 13, and does not support data persistence. It is desirable for the data holding part 12 to have a fast data writing (for example, overwriting) speed. For example, a cache on a memory can be used for the data holding part 12. The data holding part 12 can be implemented by, for example, an in-memory database, redis, etc. The in-memory database and redis are databases that store data mainly in an area on a main memory (a main memory is generally a volatile memory). In this manner, data matching the retrieval condition is temporarily held in the data holding part 12. In one example, the data of the latest 1000 items is stored in the data holding part 12.

The data processing device 10 communicates with an application, etc. The application generates a data processing request (for example, a data reference request) for a database, and sends the data processing request to the data processing device 10. The data management function part 11 searches the database in response to the data processing request from the application. When searching the database, the data processing device 10 preferentially searches the data holding part 12 over the data recording part 13. Specifically, upon receiving the data processing request, the data management function part 11 first searches the data holding part 12 in order to retrieve data that is a target of the data processing request. As a result of the search, if the target data does not exist in the data holding part 12, the data management function part 11 searches the data recording part 13 to retrieve the target data. When referring to the data holding part 12 and the data recording part 13 by the data management function part 11, for example, a retrieval expression written in a form such as JSON (JavaScript (registered trademark) Object Notation), XML (Extensible Markup Language), etc. can be used. Also, the retrieval expression may be formed by a combination of a plurality of conditions such as Date = 2015, 2016 and Device_no = 1.

In the IoT field, an application that periodically executes processing such as state monitoring is often used, and there are retrieval conditions that are frequently used in data retrieval. For example, the retrieval condition such as data belonging to the latest segment on the time series is often used. In the conventional general configuration, the latest data is not necessarily recorded in the data holding part whose reading speed is faster. In that case, since a data recording part with a slower reading speed will be referred to, a reference speed sometimes becomes slow. In the present embodiment, a retrieval condition corresponding to a retrieval condition often used in data retrieval is registered, data matching the retrieval condition is held in the data holding part 12, and the data holding part 12 is preferentially searched in response to a data processing request from the application. As a result, data having a high possibility of being referred to by the application is held in the data holding part 12 having a faster reading speed and the data holding part 12 is preferentially searched, so the data reference speed is improved.

The retrieval condition registered in the data processing device 10 is not limited to the retrieval condition such as data belonging to the latest segment on the time series. For example, when an application that refers to error data is used, a retrieval condition such as error data may be registered. The retrieval condition to be registered in the data processing device 10 can be changed (for example, modified, added, or deleted) according to an application that refers to the database. The retrieval condition may be in a form of a retrieval expression, such as Key: Date, Value:2016, etc. In addition, the retrieval condition may include a condition for designating a data generation source.

Compared with a conventional data processing device that sequentially assigns indices to all the data to be written and acquires data using the indices at the time of reference, the data processing device 10 according to the present embodiment does not require a process of assigning indices. Thus, data writing speed is increased, and by holding the data that matches the retrieval condition with the high reference frequency in the data holding part 12 that can read at high speed, acquisition of data that is often referred to is speeded up. These effects are particularly large in the case of handling data, which is large in number and updated in a time series manner, and which also has a condition of a high reference frequency such as the latest value, etc.

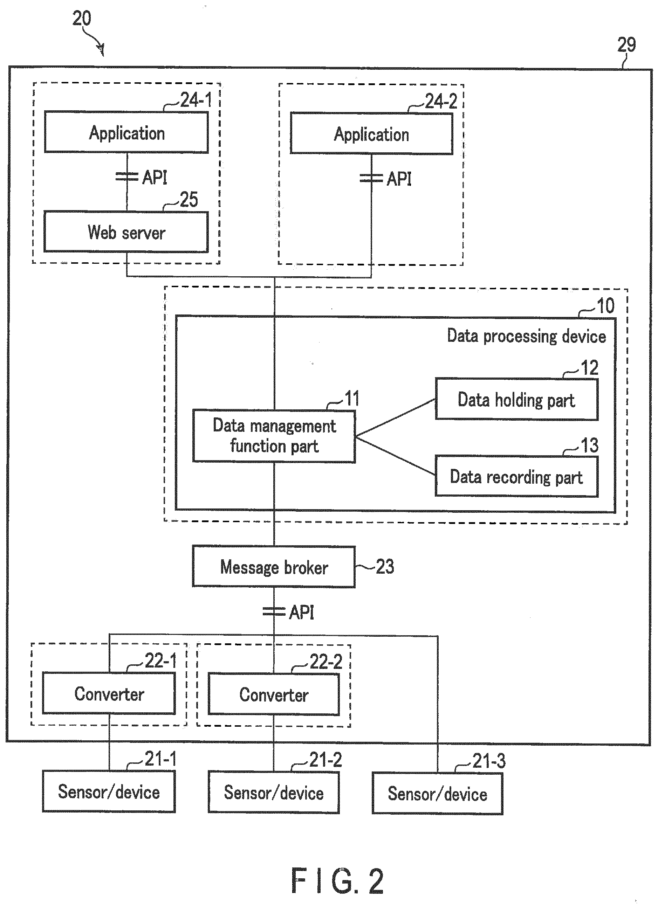

FIG. 2 shows a configuration example of a data processing system 20 including the data processing device 10. As shown in FIG. 2, an application 24 connects to the data management function part 11 directly or via a web server 25 (for example, node.js, etc.), etc., and sends a data processing request to the data management function part 11. In the example of FIG. 2, an application 24-1 is connected to the data management function part 11 via the web server 25, and an application 24-2 is directly connected to the data management function part 11. The application 24 may be built on the web server 25. In addition, the data processing request from the application may be converted through an API (Application Programming Interface) (for example, REST API), etc. The application 24 may operate on the same hardware as the data processing device 10 or may operate on hardware different from the data processing device 10. Also, the application may operate on a server on a cloud.

The data processing device 10 collects data from a sensor/device 21 (in this example, three sensors/devices 21-1, 21-2, and 21-3). A communication path between the data processing device 10 and the sensor/device 21 may be in any form. For example, the data processing device 10 may receive data from the sensor/device 21 via a message broker, etc., or may receive data directly from the sensor/device 21. In the example of FIG. 2, a message broker 23 is provided between the sensors/devices 21-1, 21-2, and 21-3 and the data processing device 10. The message broker 23 may receive data directly from the sensor/device 21, or may receive data via software such as a converter. In the example of FIG. 2, the message broker 23 receives data from the sensor/device 21-1 via a converter 22-1, receives data from the sensor/device 21-2 via a converter 22-2, and receives data directly from the sensor/device 21-3. The data from the sensor/device 21 may be converted through an API, etc.

A portion 29 including the data processing device 10, the application 24, and a converter 22 may be mounted on the same hardware. In addition, the data processing device 10, the application 24, the converter 22, and the sensor/device 21 are separated and implemented as different virtual units (for example, a container, a virtual machine, etc.) as indicated by broken line blocks in FIG. 2, or may be implemented as the same virtual unit. By implementing the data processing device 10, the application 24, the converter 22, and the sensor/device 21 in different virtual units, resources can be separated and used safely. In addition, by implementing the data processing device 10, the application 24, the converter 22, and the sensor/device 21 in virtual units, it may be possible to save hardware resources such as a CPU and a memory, and to reduce the trouble of updating, adding, or deleting software.

Next, an operation of the data processing device 10 will be described.

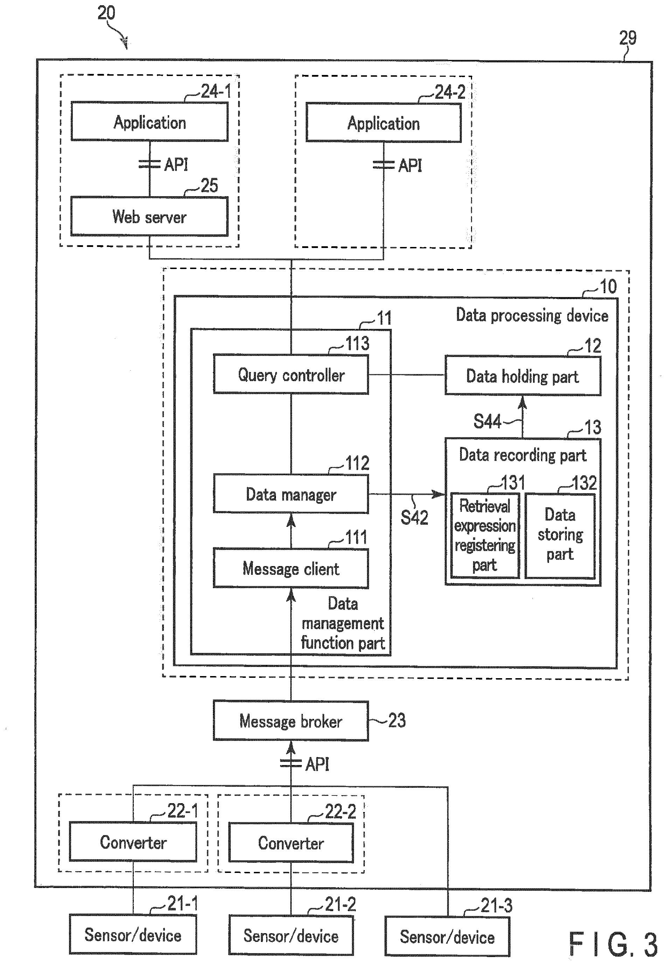

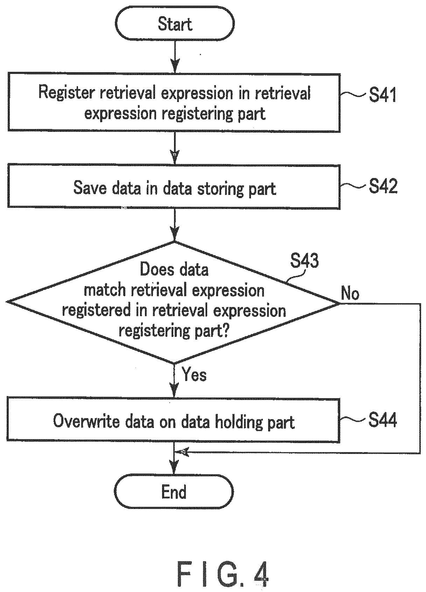

An example of a data accumulation method will be described with reference to FIGS. 3 and 4. Herein, the data management function part 11 includes a message client 111, a data manager 112, and a query controller 113, and the data recording part 13 includes a retrieval expression registering part 131 and a data storing part 132, as shown in FIG. 3.

A retrieval expression representing a retrieval condition is registered in the retrieval expression registering part 131 in advance (step S41 in FIG. 4). The data management function part 11 saves the data acquired from the sensor/device 21 in the data storing part 132 (step S42). Specifically, the message client 111 receives the data from the sensor/device 21 via the message broker 23, and sends the received data to the data manager 112. Subsequently, the data manager 112 writes the data from the sensor/device 21 to the data storing part 132 in the data recording part 13.

It is determined whether or not the saved data matches the retrieval expression registered in the retrieval expression registering part 131 (step S43). If the saved data matches the retrieval expression, the data is overwritten on the data holding part 12 (step S44), and the process ends. On the other hand, if the saved data does not match the retrieval expression, the process ends without overwriting on the data holding part 12.

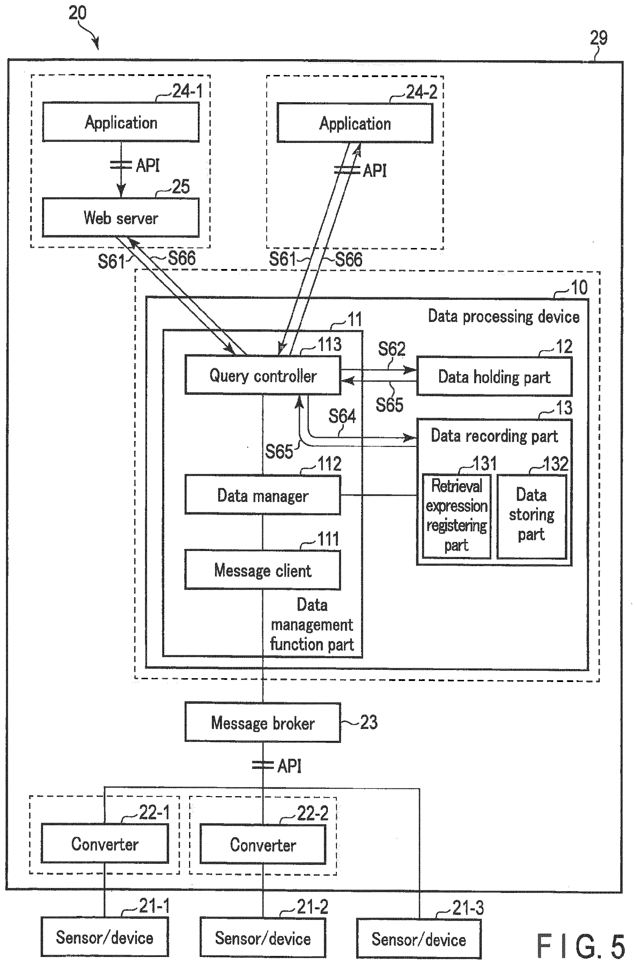

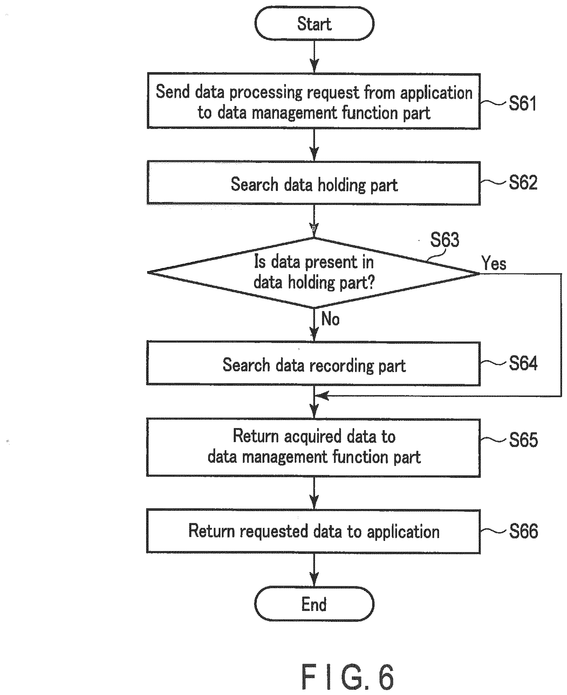

An example of a data reference method will be described with reference to FIGS. 5 and 6.

The query controller 113 in the data management function part 11 receives a data processing request from the application 24 (step S61 in FIGS. 5 and 6). For example, as shown in FIG. 5, the query controller 113 receives the data processing request from the application 24-1 via the web server 25, or receives the data processing request directly from the application 24-2.

The query controller 113 searches the data holding part 12 in response to the data processing request (step S62). If data to be retrieved is present in the data holding part 12, the query controller 113 retrieves data from the data holding part 12 (step S64). On the other hand, if the data to be retrieved is not present in the data holding part 12, the query controller 113 searches the data storing part 132 in the data recording part 13 (step S63), and retrieves data from the data storing part 132 (step S64).

The query controller 113 sends the data acquired from the data holding part 12 or the data storing part 132 to the application (step S65). For example, as shown in FIG. 5, the query controller 113 sends data to the application 24-1 via the web server 25, or sends the data directly to the application 24-2. Thus, the process ends.

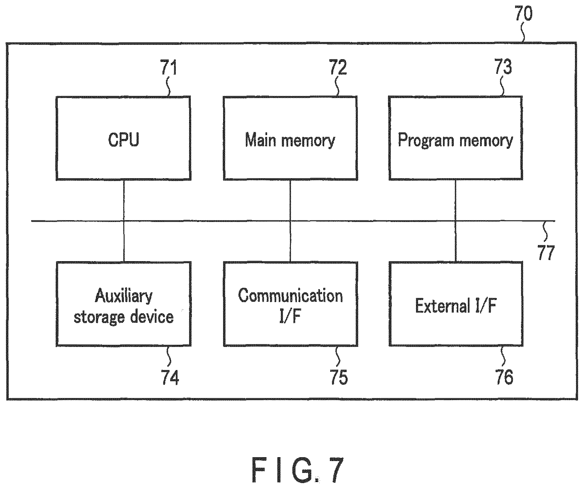

FIG. 7 shows a computer 70 which is an example of hardware realizing the data processing device 10. As shown in FIG. 7, the computer 70 includes a CPU 71, a main memory 72, a program memory 73, an auxiliary storage device 74, a communication interface 75, and an external interface 76, which are connected via a bus 77.

The CPU 71 reads a program stored in the program memory 73, develops the program in the main memory 72, and executes the program so as to realize the above-described function of the data processing device 10. The main memory 72 is, for example, an SRAM (Static Random Access Memory) or a DRAM (Dynamic Random Access Memory). The main memory 72 can be used for the data holding part 12. The program memory 73 may be a read-only memory (ROM), or may be implemented as a part of the auxiliary storage device 74. The auxiliary storage device 74 is, for example, an HDD or an SSD (Solid State drive), and stores various data. The auxiliary storage device 74 can be used for the data recording part 13.

The communication interface 75 includes a wired communication module, a wireless communication module, or a combination thereof, and communicates with an external device (for example, the sensor/device 21). The external interface 76 is an interface for connecting with an input device such as a keyboard, an output device such as a display device, etc. The retrieval condition described above may be registered using the input device, or may be received from an external device via the communication interface 75.

The CPU 71 is an example of a processor. The processor is not limited to a general-purpose processing circuit such as the CPU 71, but may be a dedicated processing circuit such as an ASIC (Application Specific Integrated Circuit) or an FPGA (Field Programmable Gate Array). In a case where a dedicated processing circuit is used as the processor, a program may be present in the dedicated processing circuit. The processor may include one or more general purpose processing circuits and/or one or more dedicated processing circuits.

The program for realizing the above-described processing may be provided by being stored in a computer-readable storage medium. The program is stored in a storage medium as a file in an installable format or a file in an executable format. As the storage medium, a magnetic disk, an optical disk (CD-ROM, CD-R, DVD, etc.), a magnetooptical disk (MO, etc.), a semiconductor memory, etc. can be used. The storage medium may be any medium as long as it can store a program and can be read by a computer. In addition, a program realizing the above-described processing may be stored in a computer (server) connected to a network such as the Internet to be downloaded to the computer 70 via the network.

As described above, the data processing device according to the present embodiment includes a data recording part capable of permanently storing data and a data holding part having a reading speed faster than that of the data recording part, stores data generated by a data generation source in the data recording part, if the data generated by the data generation source matches a retrieval condition registered in advance, further stores the data in the data holding part, and preferentially searches the data holding part in response to a data processing request from an application. As a result, all the data is perpetuated, the data which is often referred to is also stored in the data holding part having a faster reading speed, and the data holding part is preferentially searched in response to the data processing request. Thus, the speed of data reference is improved. Furthermore, data can be stored at high speed as compared with the conventional technique of assigning indices. That is, both perpetuation of stored data and fast data processing can be achieved.

### (Another Embodiment)

In the above-described first embodiment, when data is stored in the data recording part 13, the data recording part 13 collates the stored data with a retrieval condition, and if the stored data matches the retrieval condition, passes the data to the data holding part 12. In another embodiment, this processing may be performed by the data management function part 11. Specifically, the data management function part 11 accumulates the data from the data generation source in the data recording part 13, determines whether this data matches the retrieval condition registered in advance, and if this data matches the retrieval condition, overwrites this data on the data holding part 12.

The present invention is not limited to the above embodiments as they are, and elements can be modified and embodied in the implementation stage without departing from the gist thereof. In addition, various inventions can be formed by appropriately combining a plurality of structural elements disclosed in each of the above embodiments. For example, some structural elements may be deleted from all structural elements disclosed in each embodiment. Furthermore, structural elements over different embodiments may be appropriately combined.

## Claims

1. A data processing device comprising:
a first recording part capable of storing data permanently;
a second recording part having a reading speed faster than a reading speed of the first recording part;
a processing part that stores data generated by a data generation source in the first recording part, and if the data generated by the data generation source matches a retrieval condition registered in advance, further stores the data generated by the data generation source in the second recording part; and
a retrieving part that searches the second recording part preferentially over the first recording part in response to a data processing request from an application.

2. The data processing device according to claim 1, wherein when data that is a target of the data processing request is not present in the second recording part as a result of searching the second recording part, the retrieving part searches the first recording part.

3. The data processing device according to claim 1, wherein the retrieval condition includes a condition that target data belongs to a latest segment on a time series.

4. The data processing device according to claim 1, wherein the retrieval condition includes a condition that target data is error data.

5. The data processing device according to claim 1, wherein the data processing device, the data generation source, and the application are implemented in different virtual units.

6. A data processing method performed by a data processing device including a first recording part capable of storing data permanently and a second recording part having a reading speed faster than a reading speed of the first recording part, the method comprising:
storing data generated by a data generation source in the first recording part, and when the data generated by the data generation source matches a retrieval condition registered in advance, further storing the data generated by the data generation source in the second recording part; and
searching the second recording part preferentially over the first recording part in response to a data processing request from an application.

7. The data processing method according to claim 6, wherein the searching comprises, when data that is a target of the data processing request is not present in the second recording part as a result of searching the second recording part, searching the first recording part.

8. The data processing method according to claim 6, wherein the retrieval condition includes a condition that target data belongs to a latest segment on a time series.

9. The data processing method according to claim 6, wherein the retrieval condition includes a condition that target data is error data.

10. The data processing method according to claim 6, wherein the data processing device, the data generation source, and the application are implemented in different virtual units.
